# EUROPÄISCHE PATENTSCHRIFT

(11) **EP 0 929 933 B1**
(45) Veröffentlichungstag und Bekanntmachung des Hinweises auf die Patenterteilung: **14.10.2009**
(21) Anmeldenummer: 98933479.2
(22) Anmeldetag: 08.05.1998
(51) Int. Cl.: H02P 9/08, H02J 7/16

(54) **REGLER MIT PHASENSPANNUNGSAUSWERTUNG FÜR EINEN DREHSTROMGENERATOR**
REGULATOR WITH PHASE VOLTAGE EVALUATION FOR A THREE-PHASE CURRENT GENERATOR
REGULATEUR AVEC EVALUATION DE TENSION DE PHASE POUR UN GENERATEUR DE COURANT TRIPHASE

(30) Priorität: 31.07.1997 DE 19732961
(43) Veröffentlichungstag der Anmeldung: 21.07.1999
(73) Patentinhaber: ROBERT BOSCH GMBH, 70442 Stuttgart (DE)
(72) Erfinder: KOSS, Thomas, D-72760 Reutlingen (DE); NASSWETTER, Günter, D-72810 Gomaringen (DE)
(86) Internationale Anmeldenummer: PCT/DE1998/001280
(87) Internationale Veröffentlichungsnummer: WO 1999/007064

(56) Entgegenhaltungen:
- EP-A- 0 408 436
- EP-A- 0 577 994
- EP-A- 0 726 633
- DE-A- 4 327 485
- US-A- 4 794 898

## Beschreibung

Die Erfindung geht aus von einem Regler mit Phasenspannungsauswertung für einen Drehstromgenerator mit mehreren Phasenwicklungen sowie einer Erregerwicklung, nach der Gattung des Hauptanspruchs.

### Stand der Technik

In Kraftfahrzeugen werden zur Erzeugung der elektrischen Energie üblicherweise Drehstromgeneratoren eingesetzt, deren Ausgangsspannung mit Hilfe eines Spannungsreglers durch geeignete Beeinflussung des Erregerstromes auf konstante Werte geregelt werden kann. Der Erregerstrom wird bei herkömmlichen Drehstromgeneratoren über die Erregerdioden bereitgestellt. Bei Drehstromgeneratoren, bei denen der Generatorregler zur Einsparung der Erregerdioden direkt am Batterieversorgungsanschluß B+ betrieben wird, wird eine Detektionsschaltung benötigt, die in der Lage ist, einen sich drehenden Generator von einem stehenden zu unterscheiden. Diese Unterscheidung ist erforderlich, denn bei Erkennen der Generatorrotation muß der Regler von einem Vorerregungs- in den eigentlichen Regelzustand umschalten. Zur Erkennung, ob sich der Generator dreht oder ob er steht, kann beispielsweise die an einem Phasenanschluß des Generators auftretende Spannung ausgewertet werden. Diese Spannung besteht aus einem Gleichspannungsanteil, der im wesentlichen durch z. B. Restströme der Gleichrichterdioden und den Belastungswiderstand durch die Phasenauswerteschaltung bestimmt wird und einem darauf überlagerten Wechselspannungsanteil, dessen Amplitude von der Erregung und der Drehzahl des Generators abhängt, dessen Frequenz direkt mit der Drehfrequenz des Generators korreliert.

Um nun zu Beginn der Rotation des Generators eine zuverlässige Auswertung derselben zu erreichen, ist es notwendig, ein Signal mit kleiner AC-Amplitude auf unbekanntem DC-Potential auszuwerten.

Es wurden daher bisher Methoden durchgeführt, bei denen eine Kompensation der Restströme und somit des DC-Anteils mittels einer Stromsenke erfolgte. Diese Methode erreicht jedoch nicht die geforderte Betriebssicherheit, da wegen Alterung und Verschmutzung kein praktikabler Grenzwert für diese Stromsenke existiert.

Eine Schaltungsanordnung zur Messung der Drehzahl eines fremderregten Drehstromgenerators bzw. zur Erkennung, ob sich der Generator dreht oder ob er steht, wird beispielsweise in der DE OS 43 27 485 beschrieben. Bei dieser bekannten Schaltungsanordnung wird die an einer Phasenwicklung abgegriffene Phasenspannung, die einen drehzahlabhängigen Wechselspannungsanteil aufweist, zur Drehzahlbestimmung ausgewertet. Zur Verbesserung der Auflösung bzw. zur Steigerung der Zuverlässigkeit der Erkennung des Drehbeginns des Generators wird eine andere Phasenwicklung über einen Widerstand mit Masse verbunden. Dadurch wird ein Spannungsteiler erhalten, an dem die verkettete Spannung zwischen den beiden Phasenwicklungen liegt. Diese verkettete Phasenspannung ist größer als eine Phasenspannung allein und läßt daher eine zuverlässigere Erkennung des Drehbeginns des Generators zu. Erkannt wird der Drehbeginn, wenn die verkettete Phasenspannung einen vorgebbaren Schwellwert überschreitet.

Aus der EP 0 408 436 ist ein Spannungsregler bekannt, der eine Schaltung umfaßt, die zwei verschiedene Phasenspannungen des Drehstromgenerators auswertet. Aus der Differenz zwischen den zwei Phasenspannungen wird dabei die Drehzahl des Drehstromgenerators ermittelt. Der Drehbeginn des Generators kann relativ schnell erkannt werden, allerdings hat der bekannte Spannungsregler den Nachteil, daß zwei Phasenanschlüsse erforderlich sind.

Aus der EP-A- 0577994 ist ein Spannungsregler gemäß dem Oberbegriff des Anspruchs 1 bekannt.

### Vorteile der Erfindung

Der erfindungsgemäße Regler mit Phasenspannungsauswertung für einen Drehstromgenerator mit den Merkmalen des Anspruchs 1 hat gegenüber den bekannten Lösungen den Vorteil, daß eine besonders zuverlässige und störsichere Auswertung der Phasenspannung und Berücksichtigung der ermittelten Phasenspannung bei der Generatorregelung möglich ist, die vorteilhafterweise durch den gegebenenfalls vorhandenen Gleichspannungspegel nicht gestört wird. Besonders vorteilhaft ist dabei, daß nur eine Phasenspannung ausgewertet wird, so daß ein zweiter Phasenanschluß entfallen kann.

Erzielt werden diese Vorteile, indem ein Phasensignal des Generators ausgewertet wird und dieses Phasensignal mit Hilfe eines Fensterkomparators ausgewertet wird, wobei die obere und die untere Schwelle jeweils in der Weise verändert wird, daß bei ansteigender Spannung ein Erreichen der oberen Schwelle zu einem Ansteigen dieser Schwellen und bei fallender Spannung und erreichen der unteren Schwelle ein Absenken dieser Schwellen erfolgt. Beide Schaltpunkte werden zur Bildung eines frequenzabhängigen Auswertesignales herangezogen und aus der so ermittelten Frequenz wird die Drehzahl des Generators ermittelt.

Weiter Vorteile der Erfindung werden durch die in den Unteransprüchen angegebenen Maßnahmen erzielt. Diese Unteransprüche erstrecken sich insbesonders auf vorteilhafte Ausgestaltungen der Spannungsnachführung für die obere oder untere Schwelle. Mit Hilfe der aus der Phasenspannung ermittelten Generatordrehzahl läßt sich eine optimale Spannungsregelung realisieren, da zum einen rasch erkannt werden kann, ob der Generator noch steht oder ob er sich dreht, so daß unmittelbar nach der beginnenden Drehung von der Vorerregung in den eigentlichen Regelzustand übergegangen werden kann. Während des eigentlichen Regelzustandes kann die Generatordrehzahl jeweils berücksichtigt werden.

### Zeichnung

Ein Ausführungsbeispiel der Erfindung ist in der Zeichnung dargestellt und wird in der nachfolgenden Beschreibung näher erläutert. Im einzelnen zeigt die Figur 1 die erfindungswesentlichen Bestandteile eines Drehstromgenerators in Verbindung mit einem Fahrzeugbordnetz sowie der Phasenspannungsauswertung. Die Figuren 2 und 3 zeigen zwei Schaltungsmöglichkeiten für die Spannungsnachführung und in Figur 4 sind simulierte Signalverläufe für verschiedene Bedingungen dargestellt.

### Beschreibung des Ausführungsbeispieles

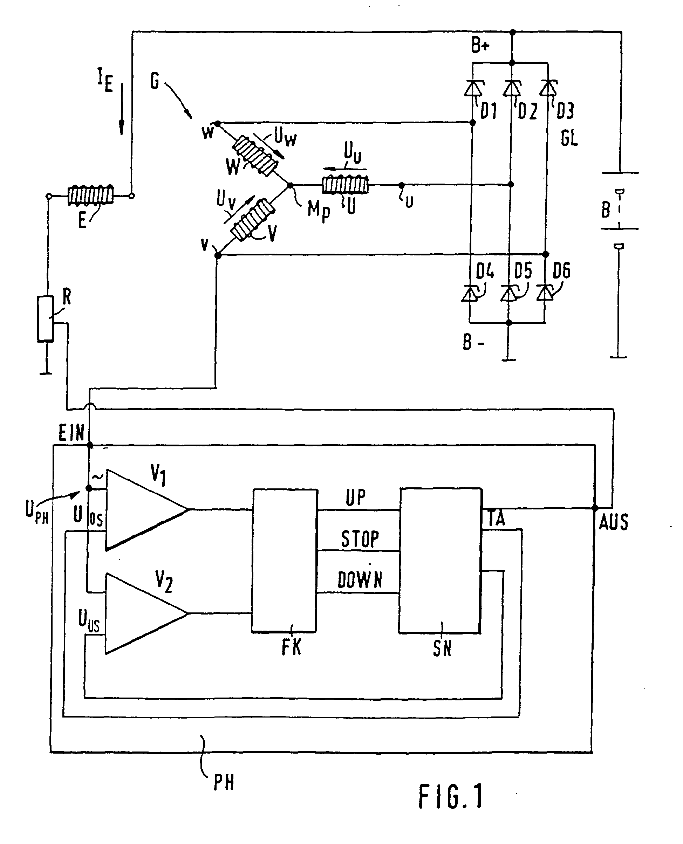

In Figur 1 ist ein Drehstromgenerator G mit den Phasenwicklungen U, V und W, die in einem gemeinsamen Mittelpunkt Mp miteinander verbunden sind, dargestellt. Die Phasenwicklungen U, V und W sind über Anschlüsse u, v, w mit den Dioden bzw. Zenerdioden D1 bis D6 der Gleichrichterbrücke GL verbunden. Die Gleichrichterbrücke GL ist über den Anschluß B+ mit dem Pluspol der Batterie B sowie über den Anschluß B- mit dem Minuspol der Batterie B bzw. Masse verbunden. An den Phasenwicklungen U, V und W entstehen die Phasenspannungen U_{U},U_{V} und U_{W}. Eine der Phasenspannungen, beispielsweise U_{V} soll zur Erkennung des Drehbeginns des Generators sowie zur Bestimmung der Generatordrehzahl ausgewertet werden.

Die Auswertung der Phasenspannung erfolgt in dem Schaltungsblock PH, der als getrennte Schaltung oder als Bestandteil des Spannungsreglers R ausgebildet sein kann, jedoch in jedem Fall mit dem Spannungsregler R in Verbindung steht. Der Spannungsregler R beeinflußt in üblicher Weise den Erregerstrom I_{E}, der durch die Erregerwicklung E des Generators fließt. Die Erregerwicklung E ist bei dem in der Figur 1 dargestellten Ausführungsbeispiel direkt an die Klemme B+ des Generators bzw. an den Pluspol der Batterie B angeschlossen. Erregerdioden sind bei einem derartigen Generatorsystem nicht erforderlich. Dem Block PH zur Auswertung der Phasenspannung wird die Phasenspannung U_{PH} über den Eingang EIN zugeführt.

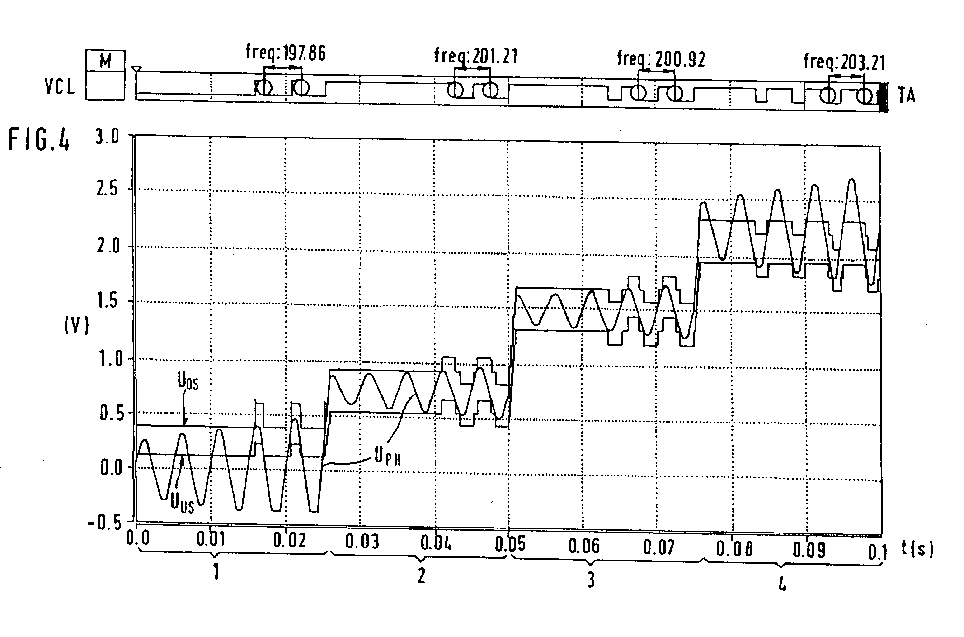

Der Schaltungsblock PH besteht aus zwei Vergleichern bzw. Komparatoren V₁ und V₂, die zusammen mit dem Block F_{K} einen Fensterkomparator bilden. In den Komparatoren V₁ und V₂ wird dabei die Phasenspannung U_{PH} mit einem oberen Schwellwert U_{OS} bzw. einem unteren Schwellwert U_{US} verglichen. Ist die Phasenspannung größer als der obere Schwellwert U_{OS}, löst der Fensterkomparator einen Zählvorgang UP aus, der über den Block SN, in dem eine Spannungsnachführung bewirkt wird, eine Spannungserhöhung durchgeführt wird. Es wird dann sowohl der obere Schwellwert als auch der untere Schwellwert erhöht. Ergibt der Phasenspannungsvergleich im Fensterkomparator, daß die Phasenspannung innerhalb des Fensterbereiches liegt, wird vom Fensterkomparator ein Stopsignal abgegeben, die Spannungsnachführung wird dann unterdrückt. Liegt die Phasenspannung unterhalb einem unteren Schwellwert U_{US}, gibt der Fensterkomparator ein Down-Zählsignal ab und durch die Spannungsnachführung wird sowohl die obere als auch die untere Schwelle herabgesetzt. Am Taktausgang TA der Spannungsnachführung SN wird ein Rechtecksignal abgegeben, das jeweils bei Initiierung einer Spannungsnachführung seinen Pegel wandelt und letztendlich Informationen über die Generatordrehzahl enthält, die auswertbar sind und beispielsweise dem Spannungsregler zugeführt werden, worauf dieser seine Regelstrategie in Abhängigkeit von der ermittelten Drehzahl festlegt. Die genauen Umschaltbedingungen für die Spannungsnachführung werden im Zusammenhang mit Figur 4 noch erläutert.

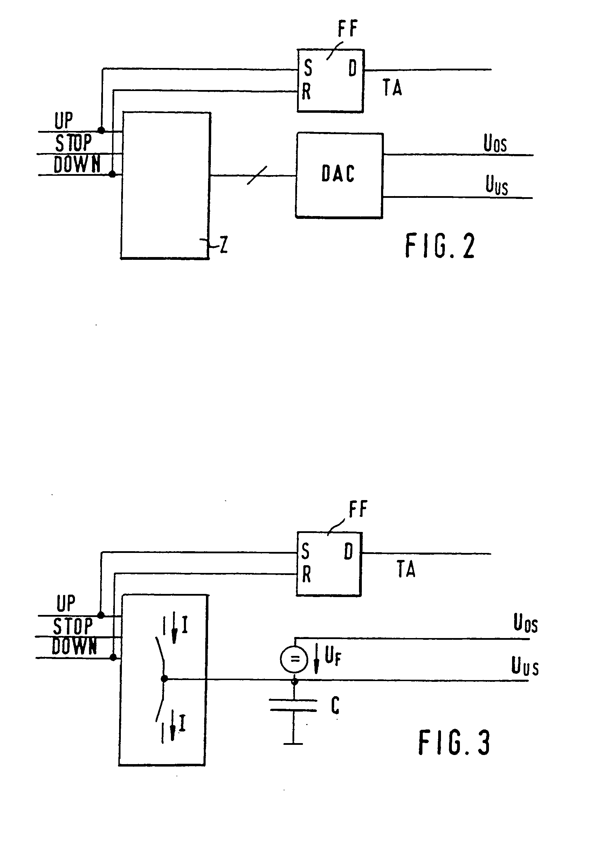

In den Figuren 2 und 3 sind zwei Ausgestaltungen der Spannungsnachführung SN dargestellt. Im ersten Beispiel nach Figur 2 ist ein n-bit Auf-Abwärts-Zähler Z vorhanden, der vom Fensterkomparator mit den Signalen Up, Stop und Down angesteuert wird. Je nach Ansteuerung zählt der Zähler also aufwärts oder abwärts oder bleibt auf einem konstanten Zählwert. Der Zählerstand des Zählers Z wird im Digital/Analog-Wandler DAC in eine Analogspannung gewandelt, die den oberen und den unteren Schwellwert U_{OS} und U_{US} bestimmt. Überschreitet die Phasenspannung die obere Komparatorschwelle, wird die Zählrichtung des Zählers Z auf Up gesetzt und der Zählerstand und somit die Hilfsspannung wird über eine festgelegte Taktrate soweit erhöht, daß sich die Phasenspannung wieder unterhalb der oberen Schwelle befindet. Eine Umschaltung der Zählrichtung auf Down erfolgt erst, wenn die Phasenspannung den unteren Schwellwert unterschreitet, wobei zu beachten ist, daß der untere Schwellwert hochgesetzt wurde. Die Spannungsnachführung kann als Erzeugung einer Hilfsspannung bezeichnet werden, wobei die Hilfsspannung beiden Schwellwerten zur Schwellwerwerschiebung überlagert wird.

Die erwähnte Schwellenumschaltung kann anhand der Figur 4 wie folgt erläutert werden: erreicht die Phasenspannung die obere Schwelle U_{OS}, wird die obere Schwelle hochgesetzt, da der Fensterkomparator den Zähler Z veranlaßt, aufwärts zu zählen. Gleichzeitig wird über die Spannungsnachführung auch die untere Schwelle hochgesetzt, wobei im Bereich 1 die untere Schwelle weniger stark erhöht wird, da sich die Schaltung an ihrem unteren Anschlag befindet. Nach Abfall der Phasenspannung U_{PH} auf einen Wert, der der unteren Schwelle U_{US} entspricht, werden die beiden Schwellen wieder zurückgeschaltet auf ihren ursprünglichen Wert. Beim nächsten Erreichen der oberen Schwelle durch die Phasenspannung werden die Schwellen wieder hochgesetzt und nach Erreichen der unteren Schwelle wieder zurückgesetzt.

Beim Hochsetzen der Schwellen wird der Seteingang des Flip-Flops FF, der mit dem Up-Eingang des Zählers Z verbunden ist gesetzt. Beim Zurückschalten erfolgt ein Reset des Flip-Flops FF. Am Ausgang des Flip-Flops FF wird somit ein VCL-Auswertesignal TA erhalten, dessen Impulsabstände, beispielsweise werden jeweils die Rückflanken ausgewertet, genau ein Maß für die Frequenz der Phasenspannung darstellt. Das Auswertesignal TA hat bei jeder Schwellenveränderung einen Pegelwechsel.

In den Bereichen 2, 3 und 4 der Figur 4 sind Beispiele dargestellt, bei denen die Phasenspannung beim Erreichen des oberen und des unteren Schwellwertes jeweils eine Schwellwertverschiebung auslöst. Im Bereich 2 wird dabei zunächst die obere Schwelle erreicht und nach Erreichen werden beide Schwellen erhöht. Sinkt die Phasenspannung wieder auf die untere Schwelle, werden beide Schwellen auf ihren ursprünglichen Wert erniedrigt und bei Erreichen der erniedrigten Schwelle erhält der Zähler Z ein Down-Signal, wodurch beide Schwellen um denselben Wert erniedrigt werden. Schwellenverschiebungen werden also grundsätzlich ausgelöst, wenn die Phasenspannung eine der Schwellen erreicht.

Bei dem im Bereich 3 dargestellten Signalverlauf erreicht die Phasenspannung zuerst die untere Schwelle. Dadurch wird dem Zähler zunächst ein Down-Signal zugeführt und er zählt abwärts, wodurch die beiden Schwellen zunächst erniedrigt werden. Nach Erreichen der oberen herabgesetzten Schwelle wird wieder auf den ursprünglichen Schwellwert zurückgeschaltet und bei Erreichen dieses Schwellwertes erfolgt eine weitere Schwellenerhöhung, wobei jeweils der obere und der untere Schwellwert in gleichem Maß verändert wird.

In dem mit 4 bezeichneten Bereich befindet sich die Schaltung am oberen Anschlag. Das Phasensignal sitzt dabei auf einem so hohen Gleichspannungspegel, daß eine Schwellwerterhöhung nicht mehr stattfinden kann, sondern nur noch eine Absenkung bei Erreichen der unteren Schwelle. Eine Auswertung des VCL-Signales TA ist jedoch dennoch noch möglich.

Anhand des VCL-Signales TA wird, wie bereits erläutert, zum einen erkannt, ob sich der Generator dreht oder ob er steht. Durch Ausmessen des Zeitabstandes gleichartiger Flanken des VCL-Signales läßt sich die Drehzahl des Generators bestimmen. Wird diese dem Regler zugeführt, kann der Regler die Generatordrehzahl bei der Regelung mit berücksichtigen.

In Figur 3 ist eine zweite Möglichkeit der Spannungsnachführung dargestellt, die Erzeugung des Auswertesignales TA ist gleich wie beim Beispiel nach Figur 2. Bei dieser Lösung wird der Zähler ersetzt durch eine zuschaltbare Stromquelle. Wird vom Fensterkomparator ein Up-Signal gegeben, wird der Kondensator C durch Zuführen eines Stromes I aufgeladen und die untere Schwelle wird erhöht. Die Differenz zwischen unterer und oberer Schwelle wird mit Hilfe einer Spannungsquelle, die eine Spannung U_{F} liefert, konstant gehalten, das heißt die obere Schwelle wird in gleichem Maß erhöht wie die untere Schwelle. Gibt der Fensterkomparator ein Down-Signal, wird der Kondensator C entsprechend entladen und die Schwellen werden abgesenkt. Solange ein Stopsignal anliegt, bleiben die Schwellen konstant.

Wird die erfindungsgemäße Phasenspannungsauswertung allgemein zur Auswertung einer periodischen Spannung eingesetzt, ist eine vorteilhafte Abtrennung des Wechselanteils von einem eventuell vorhandenen Gleichspannungsanteil möglich und die reine Wechselspannung auswertbar. Ein solcher Einsatz einer Spannungsauswertung wäre z. B. bei Sensoren mit periodischen Ausgangssignalen möglich, z. B. bei Kurbel-/Nockenwellensensoren, die rotierende Zahnscheiben abtasten.

## Patentansprüche

1. Spannungsregler (R) für einen Drehstromgenerator (G) mit Phasenwicklungen (U,V,W) und einer Erregerwicklung (E), mit Mitteln zur Erfassung und Auswertung einer Phasenspannung (U_{U},U_{V},U_{W}) und Berücksichtigung der erfaßten Phasenspannung bei der Regelung des durch die Erregerwicklung fließenden Erregerstromes, **dadurch gekennzeichnet, daß** die Phasenspannung einem Fensterkomparator zugeführt wird, dessen Schwellen (U_{oOS}, U_{US}) veränderbar sind, daß eine Schwellenveränderung erfolgt, wenn die Phasenspannung eine der Schwellen erreicht und ein Ausgangssignal erzeugt wird, das von der Frequenz der Phasenspannung abhängig ist und insbesonders bei jeder Schwellwertveränderung einen Pegelwechsel aufweist.

2. Spannungsregler zur Regelung eines Drehstromgenerators nach Anspruch 1, **dadurch gekennzeichnet, daß** aus dem Abstand gleichartiger Signalflanken des Ausgangssignales (VCL) die Drehzahl des Generators ermittelt wird.

3. Spannungsregler zur Regelung eines Drehstromgenerators nach Anspruch 1 oder 2, **dadurch gekennzeichnet, daß** die Spannungsnachführung für die Schwellen des Fensterkomparators mit Hilfe einer Spannungsnachführungsschaltung (SN) erfolgt, wobei die Spannungsnachführungsschaltung vom Fensterkomparator Ansteuersignale erhält, die eine Spannungserhöhung, eine Spannungskonstanthaltung oder eine Spannungsverringerung bewirken.

4. Spannungsregler zur Regelung eines Drehstromgenerators nach Anspruch 3, **dadurch gekennzeichnet, daß** die Spannungsnachführungsschaltung einen Zähler (Z) umfaßt, der vom Fensterkomparator die Ansteuersignale Up, Stop, Down erhält und dessen Zählerstand mit Hilfe eines Digital/Analog-Wandlers (DAC) zur Erzeugung einer Hilfsspannung ausgewerte wird, wobei die Hilfsspannung die obere und untere Schwelle (U_{OS},U_{US}) des Fensterkomparators beeinflußt.

5. Spannungsregler für einen Drehstromgenerator nach Anspruch 3, **dadurch gekennzeichnet, daß** die Spannungsnachführungsschaltung (SN) Schaltmittel umfaßt, über die ein Kondensator (C) durch Zuführen eines Stromes aufgeladen oder durch Abführen eines Stromes oder auf konstantem Potential gehalten werden kann.

6. Spannungsregler für einen Drehstromgenerator nach Anspruch 5, **dadurch gekennzeichnet, daß** eine Konstantspannungsquelle vorhanden ist, die mit dem Kondensator in Verbindung steht und so ausgelegt ist, daß am Verbindungspunkt zwischen Konstantspannungsquelle und Kondensator die untere Schwellenspannung (U_{US}) und auf der entgegengesetzten Seite der Konstantspannungsquelle die obere Spannungsschwelle (U_{OS}) abgreifbar ist.

7. Spannungsregler für einen Drehstromgenerator nach einem vorhergehenden Anspruch, **dadurch gekennzeichnet, daß** ein Flip-Flop (FF) vorhanden ist, dessen S-Eingang bei Erzeugung eines Up-Ansteuersignales gesetzt wird, dessen R-Eingang bei Erzeugung eins Down-Signales angesteuert wird und an dessen D-Taktausgang das Ausgangssignal entsteht, das als VCL-Signal zur Ermittlung der Drehzahl des Generators auswertbar ist.

## Claims

1. Voltage regulator (R) for a three-phase generator (G) having phase windings (u, v, w) and a field winding (E), having means for detecting and evaluating a phase voltage (Uᵤ, Uᵥ, U_{w}) and taking into account the detected phase voltage when the field current flowing through the field winding is regulated, **characterized in that** the phase voltage is fed to a window comparator of which the thresholds (Uₒₛ, Uᵤₛ) can be varied, **in that** the threshold is varied when the phase voltage reaches one of the thresholds and an output signal is generated, said output signal being dependent on the frequency of the phase voltage and, in particular with each variation in threshold value, experiencing a level change.

2. Voltage regulator for regulating a three-phase generator according to Claim 1, **characterized in that** the rotation speed of the generator is determined from the distance between identical signal flanks of the output signal (VCL).

3. Voltage regulator for regulating a three-phase generator according to Claim 1 or 2, **characterized in that** the voltage is corrected for the thresholds of the window comparator with the aid of a voltage correction circuit (SN), with the voltage correction circuit receiving actuation signals from the window comparator, said actuation signals causing the voltage to be increased, kept constant or reduced.

4. Voltage regulator for regulating a three-phase generator according to Claim 3, **characterized in that** the voltage correction circuit comprises a counter (Z) which receives the actuation signals Up, Stop, Down from the window comparator and of which the counter reading is evaluated with the aid of a digital/analog converter (DAC) for generating an auxiliary voltage, with the auxiliary voltage influencing the upper and lower thresholds (Uₒₛ, Uᵤₛ) of the window comparator.

5. Voltage regulator for a three-phase generator according to Claim 3, **characterized in that** the voltage correction circuit (SN) comprises two switching means by means of which a capacitor (C) can be charged by feeding a current or can be held at constant potential by discharging a current.

6. Voltage regulator for a three-phase generator according to Claim 5, **characterized in that** a constant voltage source is present, said constant voltage source being connected to the capacitor and being designed such that the lower threshold voltage (Uᵤₛ) can be tapped off at the connection point between the constant voltage source and capacitor, and the upper voltage source (Uₒₛ) can be tapped off on the opposite side of the constant voltage source.

7. Voltage regulator for a three-phase generator according to one of the preceding claims, **characterized in that** a flip-flop (FF) is present, the S input of said flip-flop being set when an Up actuation signal is generated, the R input of said flip-flop being activated when a Down signal is generated, and the output signal being produced at the D clock output of said flip-flop, it being possible to evaluate said output signal as a VCL signal in order to determine the rotation speed of the generator.

## Revendications

1. Régulateur de tension (R) pour un générateur de courant triphasé (G) comprenant des enroulements de phase (u, v, w) et un enroulement excitateur (E), comprenant des moyens pour acquérir et évaluer une tension de phase (Uu, Uv, Uw) et tenir compte de la tension de phase acquise lors de la régulation du courant d'excitateur qui circule à travers l'enroulement excitateur, **caractérisé en ce que** la tension de phase est acheminée à un comparateur à fenêtres dont les seuils (Uos, Uus) sont variables, qu'une modification des seuils a lieu lorsque la tension de phase atteint l'un des seuils et un signal de sortie est généré, lequel est dépendant de la fréquence de la tension de phase et présente un changement de niveau, notamment à chaque modification des valeurs de seuil.

2. Régulateur de tension pour réguler un générateur de courant triphasé selon la revendication 1, **caractérisé en ce que** la vitesse de rotation du générateur est déterminée à partir de l'écart entre des fronts de signal identiques du signal de sortie (VCL).

3. Régulateur de tension pour réguler un générateur de courant triphasé selon la revendication 1 ou 2, **caractérisé en ce que** l'asservissement de tension pour les seuils du comparateur à fenêtres s'effectue à l'aide d'un circuit d'asservissement de tension (SN), le circuit d'asservissement de tension recevant de la part du comparateur à fenêtres des signaux de commande qui provoquent une augmentation de la tension, un maintien de la tension à une valeur constante ou une diminution de la tension.

4. Régulateur de tension pour réguler un générateur de courant triphasé selon la revendication 3, **caractérisé en ce que** le circuit d'asservissement de tension comprend un compteur (Z) qui reçoit de la part du comparateur à fenêtres les signaux de commande Up, Stop, Down et dont la valeur comptée est interprétée à l'aide d'un convertisseur numérique/analogique (DAC) pour générer une tension auxiliaire, la tension auxiliaire influençant le seuil supérieur (Uos) et le seuil inférieur (Uus) du comparateur à fenêtres.

5. Régulateur de tension pour un générateur de courant triphasé selon la revendication 3, **caractérisé en ce que** le circuit d'asservissement de tension (SN) comprend deux moyens de commutation par le biais desquels un condensateur (C) peut être chargé en lui acheminant un courant ou peut être maintenu à un potentiel constant en lui prélevant un courant.

6. Régulateur de tension pour un générateur de courant triphasé selon la revendication 5, **caractérisé en ce qu'**il existe une source de tension constante qui est en liaison avec le condensateur et qui est conçue de telle sorte que la tension de seuil inférieure (Uus) peut être prélevée au point de liaison entre la source de tension constante et le condensateur et le seuil de tension supérieur (Uos) du côté opposé de la source de tension constante.

7. Régulateur de tension pour un générateur de courant triphasé selon l'une des revendications précédentes, **caractérisé en ce qu'**il existe une bascule bistable (FF) dont l'entrée S est mise à 1 lors de la génération d'un signal de commande Up, dont l'entrée R est activée lors de la génération d'un signal Down et à la sortie d'horloge D de laquelle est présent un signal de sortie qui peut être interprété comme un signal VCL pour déterminer la vitesse de rotation du générateur.
